# EUROPEAN PATENT APPLICATION

(11) **EP 2 465 774 A1**
(43) Date of publication of application: **20.06.2012**
(21) Application number: 11007878.9
(22) Date of filing: 27.09.2011
(51) Int. Cl.: B64D 9/00

(54) **Adapter and method for installing monuments**

(30) Priority: 20.12.2010 US 973072
(71) Applicant: Airbus Operations GmbH, 21129 Hamburg (DE)
(72) Inventor: Duggar, Wesley, 36526 Daphne (US); Blanchard, Joshua, 36526 Daphne (US); Jaeger, Hartwig, 21635 Jork (DE)
(74) Representative: Tönhardt, Marion

(57) **Abstract**

A tie-down adapter for attaching a monument, such as an aircraft monument, to a floor structure, such as an aircraft cargo compartment floor. The tie-down adapter includes a base and a stud protruding from the base. The base includes a plurality of fastener through holes configured to align with an existing threaded hole pattern in the cargo compartment floor. The stud is configured to penetrate a mount opening of an attachment bracket on an aircraft monument to be attached. The stud has a threaded shaft configured to receive a fastener for fixing the tie-down adapter to the monument attachment bracket. The tie-down adapter can be provided in a system, and used in a method for mounting aircraft monuments to a cargo compartment floor.

## Description

### BACKGROUND OF THE INVENTION

### FIELD OF THE INVENTION

The present invention relates generally to fastening adapters, and more particularly to an adapter for installing monuments to a floor structure without the need for modifying the floor structure.

### DESCRIPTION OF THE RELATED ART

The main deck of an aircraft typically includes interior cabin furnishing equipment such as seats, galleys, lavatories etc. for accommodating passengers. These equipment, generally referred to as "aircraft monuments," are large and heavy structures that are essentially fixed to the main deck floor structure. For example, aircraft passenger seats are typically attached to the floor by bolts that extend through a main deck floor beam and through respective mounting portions of the seat. A nut is fastened to each bolt and tightened with a wrench to provide secure attachment of the seat to the main deck floor. Electrical, hydraulic and/or pneumatic attachment structures may also be connected between the main deck and an aircraft monument. Thus, the aircraft monuments are fixed to the main deck for the long term, but may be removed by mechanics for repair, replacement or reconfiguration of the main deck layout.

The aircraft's lower deck is typically designated for temporary storage of bulk cargo. For example, passenger luggage is loaded into the cargo compartment and secured by cargo netting or straps to prevent the luggage from shifting during flight. As such, the cargo compartment includes several "tie-down" points which have a hook or cleat for quick attachment and release of tensioned netting or straps which secure the cargo. Tie-down points are typically attached to the cargo compartment floor and located throughout the compartment to provide flexibility for the aircraft crew to attach the netting or straps in different configurations for the loaded cargo.

The present inventors have recognized that, in some instances, it may be desirable to install large and heavy monuments to a floor structure without extensive changes to the flooring structure. For example, it may be desirable to install the in-flight entertainment console (IFEC) in the aft compartment of the lower deck cargo space. The present inventors have also recognized, however, that use main deck monument attachment systems (such as the seat attachment noted above) within the cargo compartment would require modifications to the cargo floor substructure to receive a bolt for securing the monument and/or to reinforce the floor's load capability. Such alteration of the cargo deck flooring would be time consuming and could necessitate extensive stress analysis for the modified floor substructure. Further, the existing tie-downs in the cargo compartment offer no practical way to permanently (or semi-permanently) attach aircraft monuments, and are generally not designed to withstand the load forces of presented by aircraft monuments.

### SUMMARY OF THE INVENTION

Accordingly, one object of embodiments of the invention is to provide a device and method for installing large and heavy monuments to a floor structure without the need for extensive modifications to the flooring structure.

Another object of embodiments of the invention is to provide a device and method for installing aircraft monuments in the cargo compartment without the need for changes to the cargo compartment floor. These and other objects may be provided by a monument adapter system and method, and a monument tie-down adapter of the present invention.

One aspect of the invention is a monument adapter system for attaching an aircraft monument to an aircraft cargo compartment floor. The system includes a tie-down adapter configured to be fastened to cargo compartment floor, the tie-down adapter including a base configured to be mounted to an existing threaded hole pattern in a substructure of the cargo compartment floor. A stud protrudes from the base and is configured to be coupled to a base structure of the aircraft monument. A monument attachment bracket is configured to be fixed to the base structure of the aircraft monument. The attachment bracket includes a monument mount opening which receives the stud of the tie-down adapter. A fastener system connects with said stud such that the monument attachment bracket is fastened to the tie-down adapter.

According to another aspect of the invention, a method for attaching an aircraft monument to the cargo compartment floor of an aircraft without modifying the floor structure is provided. The method includes identifying an existing configuration of tie-downs on the cargo compartment floor, which is suitable for meeting mounting requirements for the aircraft monument. Each tie-down in the existing configuration is replaced with a tie-down adapter to provide a mounting configuration of tie-down adapters. An aircraft monument base structure is provided to correspond to the mounting configuration of tie-down adapters. The aircraft monument base structure is fastened to the mounting configuration of tie-down adapters.

Still a further aspect of the invention includes a tie-down adapter for attaching an aircraft monument to an aircraft cargo compartment floor. The tie-down adapter includes a base comprising a plurality of fastener through holes configured to align with an existing threaded hole pattern in the cargo compartment floor. A stud protrudes from the base such that the stud is configured to penetrate a mount opening of an attachment bracket on an aircraft monument to be attached. The stud having a threaded shaft configured to receive a fastener for fixing the tie-down adapter to the monument attachment bracket.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Fig. 1 is a perspective view of an example floor structure in the cargo compartment of an aircraft to which an aircraft monument can be attached in accordance with embodiments of the present invention;

Fig. 2 is a schematic illustration of an IFEC to be attached to the cargo compartment floor of Fig. 1, in accordance with embodiments of the invention;

Fig. 3 is an exploded view of a fastening system for attaching aircraft monuments to the cargo compartment floor, in accordance with an embodiment of the invention;

Fig. 4 is a side view of a tie-down adapter 40 for mounting on the cargo compartment floor according to an embodiment of the invention;

Fig. 5 is a flow chart describing a method for attaching an aircraft monument to a cargo compartment floor in accordance with an embodiment of the invention;

Fig. 6 is an enlarged view of an opening in a cargo compartment floor panel having a tie-down adapter mounted therein, in accordance with an embodiment of the invention;

Fig. 7 is an assembly view demonstrating the alignment and fastening process for attaching the IFEC to the tie-down adapter in accordance with an embodiment of the invention;

Fig. 8 is a cross-section view of the monument attachment system fully assembled to join the attachment hardware to the tie-down adapter; and

Fig. 9 shows the example IFEC of Fig. 2 fully attached to the raised portion of the cargo compartment floor of Fig. 1 in accordance with an embodiment of the invention.

### DETAILED DESCRIPTION OF AN EMBODIMENT OF THE INVENTION

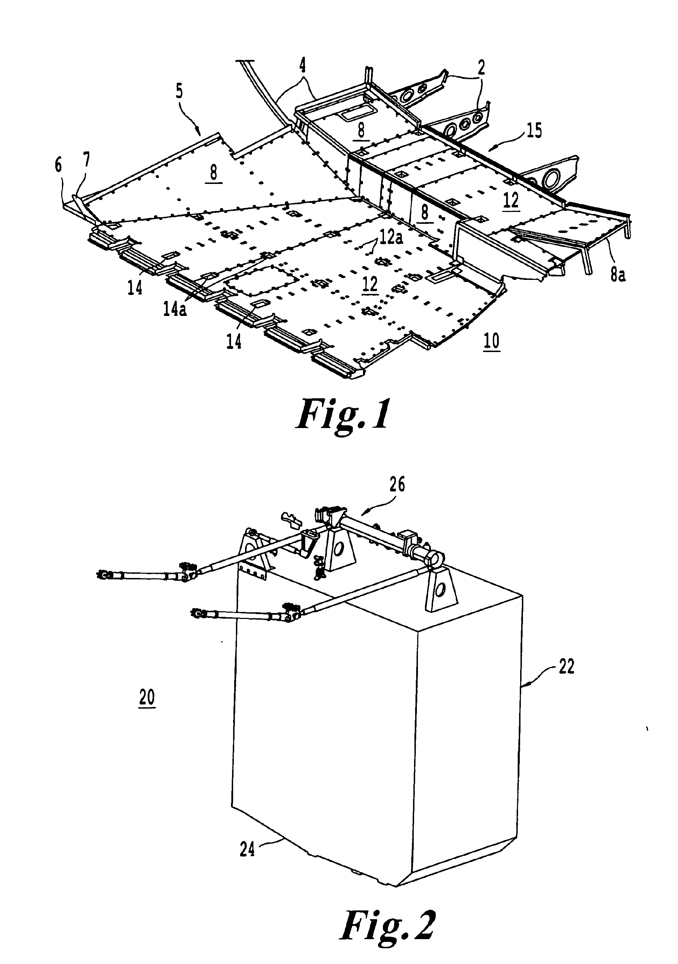

Referring now to the drawings, wherein like reference numerals may designate identical or corresponding parts throughout the several views, Fig. 1 is a perspective view of an example floor structure in the cargo compartment of an aircraft, to which an aircraft monument can be attached in accordance with one embodiment of the present invention. As seen in Fig. 1, the cargo compartment floor 10 includes lower area 5 and raised area 15, each having a tapered surface as shown at the left side of Fig. 1. The cargo compartment floor 10 includes cross members 2 and framing members 4, which intersect with each other to form a grid-like substructure for the floor. Floor panels 8 and 12 are fastened to the cargo compartment floor substructure by way of fasteners 12a, to provide a finished surface for the cargo compartment floor 10. As seen in Fig. 1, the floor panels 8 and 12 cover the lower area 5 and raised area 15, as well as a sidewall transitioning from the lower area to the raised area. In one embodiment, the floor panels 8, 12 are made from a composite material which functions to further strengthen the substructure and seals the cargo space from other portions of the aircraft so that a fire can be easily contained in the cargo space if necessary. As shown in Fig. 1, one or more intermediate layers 6, 7 may be interposed between the floor substructure and the panels 8, 12, however these intermediate layers are optional and may be omitted.

The floor panels 8, 12 are removable as illustrated by panel 8a, and can generally be of similar or dissimilar shapes in accordance with the unique requirements of an irregularly shaped cargo compartment. In the embodiment of Fig. 1, floor panels 12 include openings to expose a portion of the substructure beneath the floor panel, while floor panels 8 do not include such openings. The openings may be formed as a contiguous opening 14 within a single floor panel, or by partial openings 14a at edges of adjacent floor panels 12, which together form an opening 14 within the floor panel covering.

While not shown in detail in Fig. 1, a cargo compartment tie-down, for snagging netting or straps, is fixed to the substructure exposed by each opening 14 in the floor panels 12. According to embodiments of the invention, these tie-downs are replaced with tie-down adapters for installing aircraft monuments in the cargo compartment, as will be further described below. Fig. 2 is a schematic illustration of an IFEC to be attached to the cargo compartment floor in accordance with embodiments of the invention. As seen in Fig. 2, the IFEC 20 includes a container or rack 22 and a conduit structure 26 for routing electrical wires, communication cables, etc. to and from the IFEC 20. In one example, the IFEC has maximums dimensions of 1090mm wide, 1227mm tall, and 615 mm deep, and a maximum weight of 226 kg. The container 22 houses the IFEC equipment, and has a base surface 24, which is to be attached to the cargo compartment floor. The IFEC 20 is desirably mounted, for example, on the raised area 15 of the cargo compartment floor 10 in Fig. 1. As noted in the background section, however, existing cargo compartment tie-downs are not suitable for attachment of aircraft monuments such as the IFEC.

For example, a tie-down commonly used in the Airbus A350 cargo compartment is the standard "bullnose" tie-down, having Airbus Part No. DAN152. The bullnose tie-down includes a mounting base that is attached to the cargo compartment floor, and pair of opposing cleats that project upward from the base and extend inwardly toward each other. The opposing cleats are suitable for quick hooking of cargo netting, but provide no functionality for essentially permanent attachment of aircraft monuments to the cargo compartment floor 10.

Further, the bullnose tie-down generally has insufficient load capacity for handling heavy aircraft monuments such as the IFEC. For example, DAN152 bullnose is fastened to threaded holes in the floor, which are provided by respective nut plates fixed to the floor substructure. One example nut plate is described in National Aerospace Standard drawing no. NAS 1791 C08-3, the entire content of which is incorporated herein by reference. Each nut plate is riveted to the substructure beneath the intermediate layers 6 and 7 such that a threaded hole is accessible through holes in the intermediate layers 6, 7. The DAN152 bullnose and the NAS 1791 C08-3 nut plate offer a Shear Ultimate load limit of 8899N and a Tension Ultimate load limit of 17799N, which is far less that the load requirements of a typical aircraft monument.

These limits of existing cargo compartment tie-downs can be overcome by using known monument attachment methods, such as bolting the aircraft monument to the floor beam, as with main deck monuments. As noted in the background, however, this would require extensive effort to modify the cargo compartment floor substructure, and could diminish the structural integrity of critical substructure for the cargo space floor. Another approach to installing aircraft monuments in the cargo compartment is to use the existing threaded holes from nut plates to secure the monument, thereby avoiding modifications to the flooring structure. However, the nut plates themselves offer a small load capacity, as noted above, and the inventors recognized that use of existing threaded holes presents significant design and installation problems.

First, the existing nut plate holes are small and precisely spaced, typically in pairs, and many threaded holes would be needed to adequately secure large and heavy monuments. For example, an IFEC 20 having 6 mounting points would require 12 mounting screws. Thus, it would be necessary to design a monument mounting base to strict tolerances for aligning with the existing threaded holes. Further, even if strict design tolerances are met, it would be difficult for mechanics to precisely align the aircraft monument mounting hardware with respective holes in the floor during installation.

In addition, where the monument is directly connected to existing threaded holes, it would be difficult to thread and torque fasteners to the existing holes. The existing holes are recessed within the floor panels and/or substructure such that fasteners used to mount cargo tie-downs must be driven by a screw driver. However, a wrench is preferred to adequately torque fasteners for securing monuments, and the aircraft monument itself restricts the mechanic's ability to use a screwdriver during installation. In addition, the monument will typically cover the installer's view of the threaded holes, thus requiring blind threading of fasteners to secure the monument to the existing nut plate holes.

In view of the above-described tolerance and installation problems, the inventors determined that attaching monuments to existing threaded holes would require an undesirably long installation time. This led the inventors to discovery of a tie-down adapter and method for attaching aircraft monuments to the cargo compartment floor without the need for modifying the floor substructure.

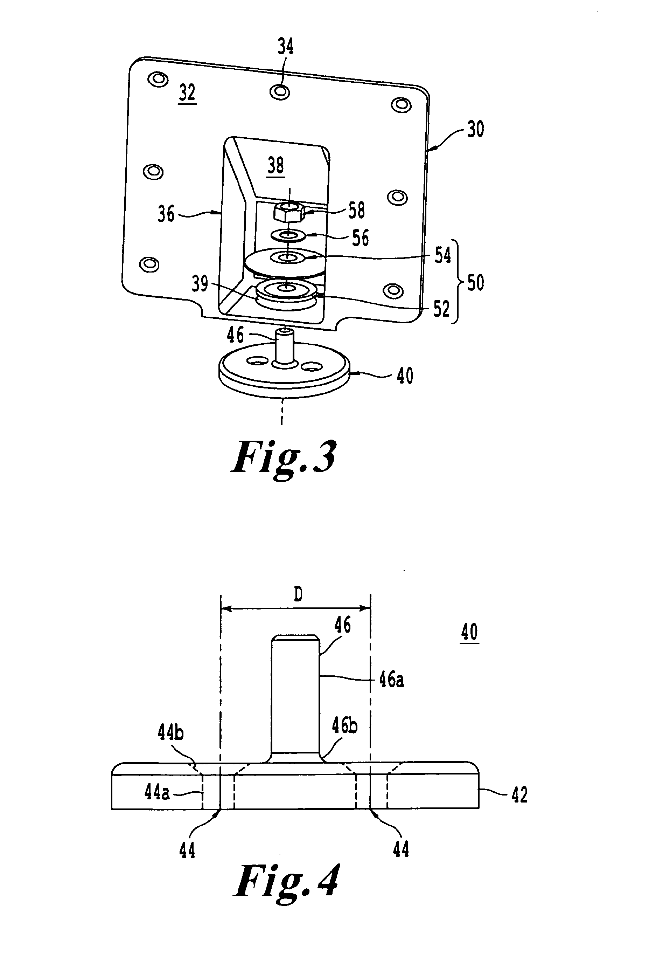

Fig. 3 is an exploded view of a fastening system for attaching aircraft monuments to the cargo compartment floor, in accordance with an embodiment of the invention. As seen in this figure, the system includes monument attachment bracket 30, tie-down adapter 40, and fastening system 50. The attachment bracket 30 is fixed to the aircraft monument, and the tie-down adapter 40 is mounted to the cargo compartment floor using existing threaded holes, as will be further described below.

Figure 4 is a side view of a tie-down adapter 40 for mounting on the cargo compartment floor according to an embodiment of the invention. As seen in Fig. 4, the tie-down adapter 40 includes a base 42, and a stud 46 protruding from the base 42. The base 42 and stud 46 can be mechanically pressed, or manufactured as a one-piece unit. The base portion 42 includes through holes 44, through which fasteners are passed to fix the tie-down adapter 40 to threaded holes in the cargo compartment floor 10. In the embodiment shown in Fig. 4, each through hole 44 includes a cylindrical portion 44a, and a flared portion 44b for countersinking a head of the fastener used. The stud 46 includes a shaft 46a, and a bevel 46b. While not shown, the shaft 46a of the stud is threaded at a suitable pitch for receiving nut 58 of the fastener system 50 shown in Fig. 3.

Returning to Fig. 3, the mounting attachment bracket 30 includes a face plate 32 having mounting holes 34 for riveting, fastening, or otherwise fixing the attachment bracket 30 to an aircraft monument. Surfaces 38 are recessed from the face plate 32 to form a cavity 36 within the attachment bracket 30. A lower surface of the cavity 36 includes a mount opening 39 for receiving the threaded stud 46 of the tie-down adapter 40. The mount opening 39 is made substantially larger than the stud 46 to provide adequate design and alignment tolerances. For example, for a floor tolerance of 1.5mm in all directions, the mount opening would need to be at least 3mm larger than the diameter of the stud in the adapter. The relative size of the threaded stud 46 and mount opening 39 may vary based on the load requirements of the stud and the number of mount holes that must be aligned with a respective stud for a monument. Fastening system 50 of the example embodiment includes eccentric bushings 52, conical washer 54, standard washer 56 and self-locking nut 58. The eccentric bushings 52 compensate for tolerances provided by the enlarged mount opening 39, and the conical washer 54 distributes the fastener load when the standard nut 58 is tightened on the stud against the standard washer 56.

The tie-down adapter 40 is preferably configured to be compatible with the cargo compartment tie-down which the adapter 40 is to replace. For example, where the tie-down adapter 40 will replace a DAN152 bullnose, the adapter is preferably made from the same material as the bullnose (i.e., Aluminium alloy 3.4364 T6) to remain consistent with thermal expansion, static stress values and other various design elements of the bullnose tie-down. Further, to maintain a consistent footprint and mounting configuration with the replaced bullnose, the base 42 of the tie-down adapter is preferably circular in shape having a diameter of approximately 44.5 mm, and the fastener holes 44 are spaced approximately 25.4 mm along the center line D, as shown in Fig. 4. In one embodiment, the tie-down adapter 40 would be mounted to the floor using the same fasteners that were removed to unmount the tie-down. Thus, where the tie-down adapter replaces a bullnose, the fastener holes 44 each have a diameter of approximately 5 mm, as well as a 100° countersink.

In the embodiment shown, the stud 46 of the tie-down adapter includes a shaft 46a and a bevel 46b. The shaft 46a has a diameter of approximately 5/16 inch and a length of approximately 22.2mm. However, other diameters and lengths may be used to provide suitable strength and protrusion distance for a given application. Although not shown in the drawings, the shaft is preferably threaded according to .3125-24 UNJF-3B such that a National Aerospace Standard NAS679C5M self-locking nut can be used as the fastening nut 58. The thread pitch and corresponding nut can be varied in accordance with design parameters, as long as the size and thread pitch of the stud 46 and nut 58 are compatible.

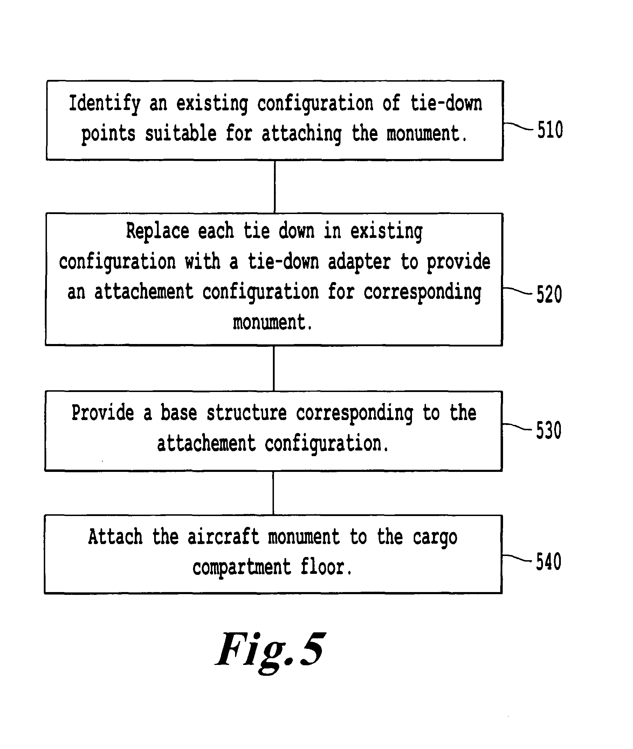

Fig. 5 is a flow chart describing a method for attaching an aircraft monument to a cargo compartment floor in accordance with an embodiment of the invention. As seen in step 510 of the flow chart, an installer must identify an existing configuration of tie-down points on the cargo compartment floor, which is suitable for meeting mounting requirements of the aircraft monument to be mounted. For example, an existing configuration should have a minimum area of cargo floor space, and a minimum number of mounting points necessary for mounting the aircraft monument to the cargo compartment floor. The minimum floor space is typically determined based on the volume of the monument to be installed, as well as space considerations within the cargo area. The minimum number of mounting points is typically determined based on the weight of the aircraft monument and the forces that will be exerted on the mounting structure in flight conditions etc., as well as the load capacity of each tie-down point.

However, the above-noted minimums may provide only a starting point for determining the actual floor space and actual number of mounting holes that will be occupied by the monument when mounted. For example, the footprint of an aircraft monument may be enlarged beyond its minimum size to encompass a greater number of existing tie-down points needed for distributing the load forces of the monument. Alternatively, the footprint may be enlarged to accommodate a greater volume of monument equipment in an area of the cargo compartment having a small vertical clearance. In this instance, the footprint may encompass more than the minimum number of tie-down points, but it may be desirable to use all available tie-down points in order to exceed minimum load capacity needed for the monument.

In step 520, each tie-down in the existing configuration is replaced with a tie-down adapter which provides a protruding stud on which the aircraft monument will be mounted. Thus, replacing the tie-down points with tie-down adapters converts the existing configuration into an attachment configuration for a corresponding aircraft monument. As the attachment configuration is fixed by the existing threaded holes in the floor, the monument to be mounted will generally require design modifications to match the attachment configuration.

Thus, in step 530, a base structure corresponding to the attachment configuration is provided for attaching the aircraft monument to the cargo compartment floor. The base structure can be provided as an integral part of the aircraft monument by designing a dedicated monument container, or by modifying and existing container to match the attachment configuration. Alternatively, the base structure can be a separate part that itself serves as an adapter which both aligns with the mounting configuration on the floor, and also provides an attachment shape for mating with an existing monument. In this regard, a single base structure adapter can be used to accommodate an aircraft monument of corresponding size, or multiple base structure adapters can be used in combination to accommodate larger monuments in a modular fashion. Still further, a specifically designed monument container can be designed to contain various different configurations of monument equipment therein to provide modular capability.

In step 540, the aircraft monument is attached to the cargo compartment floor by aligning the base structure with the mounting configuration of tie-down adapters such that each tie-down adapter is coupled to a respective mounting bracket on the base structure. A suitable fastener system is provided on each stud of a respective tie-down adapter, and the fastener is tightened on the stud to fix each tie-down adapter to a respective mounting bracket on the aircraft monument.

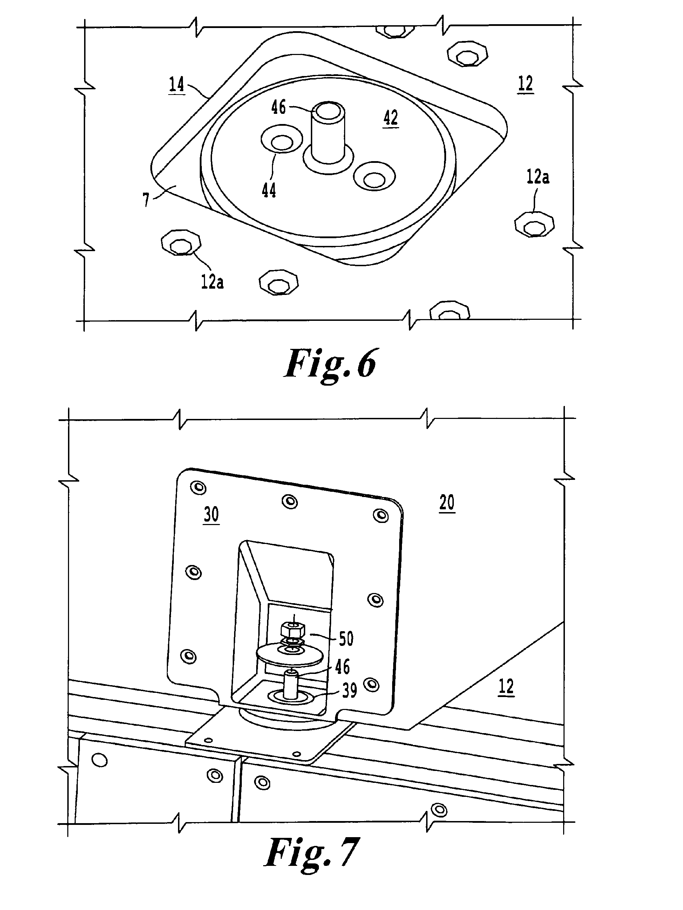

A method for attaching an aircraft monument to a cargo compartment floor according to embodiments of the invention is further described by Figs. 7-9, which illustrate attachment of the example IFEC 20 in Fig. 2, to the cargo compartment floor 10 of Fig. 1. As noted above, the IFEC 20 is preferably mounted on the raised portion 15 of the floor 10. In particular, an area of the raised portion 15 including 6 existing bullnose tie-downs was determined to provide mounting that would not exceed a Shear Ultimate load limit of 8899N and a Tension Ultimate load limit of 17799N for any single mounting point.

The existing bullnose in the identified configuration are then removed and replaced with tie-down adapters 40. Fig. 6 is an enlarged view of an opening in a cargo compartment floor panel having a tie-down adapter mounted therein, in accordance with an embodiment of the invention. As seen in this figure, the opening 14 exposes the sealing layer 7 of the cargo compartment substructure beneath the floor panel 12. An existing bullnose is removed to reveal a pair of threaded holes in the substructure (not shown) and, as seen in Fig. 6, the tie-down adapter 40 is placed within the opening 7 such that the countersunk holes 44 are aligned with threaded holes in the floor. Fasteners (preferably the fasteners removed to unmount the bullnose) are then inserted into the countersunk holes 44, threaded into the existing threaded holes in the floor 10, and tightened with a screwdriver to fix the base 42 of the tie-down adapter 40 to the floor.

As a result, a single stud protrudes above the floor panels 12 for mounting the IFEC 20. The replacement process is repeated for each of the remaining 5 bullnose tie-downs in the identified area to convert the existing configuration of bullnose tie-downs to an attachment configuration of tie-down adapters 40 for attaching the IFEC.

Fig. 7 is an assembly view demonstrating the alignment and fastening process for attaching the IFEC to the tie-down adapter in accordance with an embodiment of the invention. In Fig. 7, the tie-down adapter 40 is not shown as recessed within the floor panel 12 for clarity of installation. Further, the monument mount attachment bracket 30 is shown in a fixed position on the mounting base of IFEC 20, although fasteners are not illustrated. The IFEC 20 is coupled to the mounting configuration by aligning each stud 46 of a tie-down adapter 40 to extend through a mount opening 39 of a respective attachment bracket 30. As noted above, the mount openings 39 of the attachment brackets are enlarged to provide adequate tolerance for the installation process. As shown in Fig. 7 with the IFCE 20 coupled to the tie-down adapters 40, the stud of each tie-down adapter is within a cavity 36 of the mount attachment bracket 30 such that the installer has room to install the fastening system.

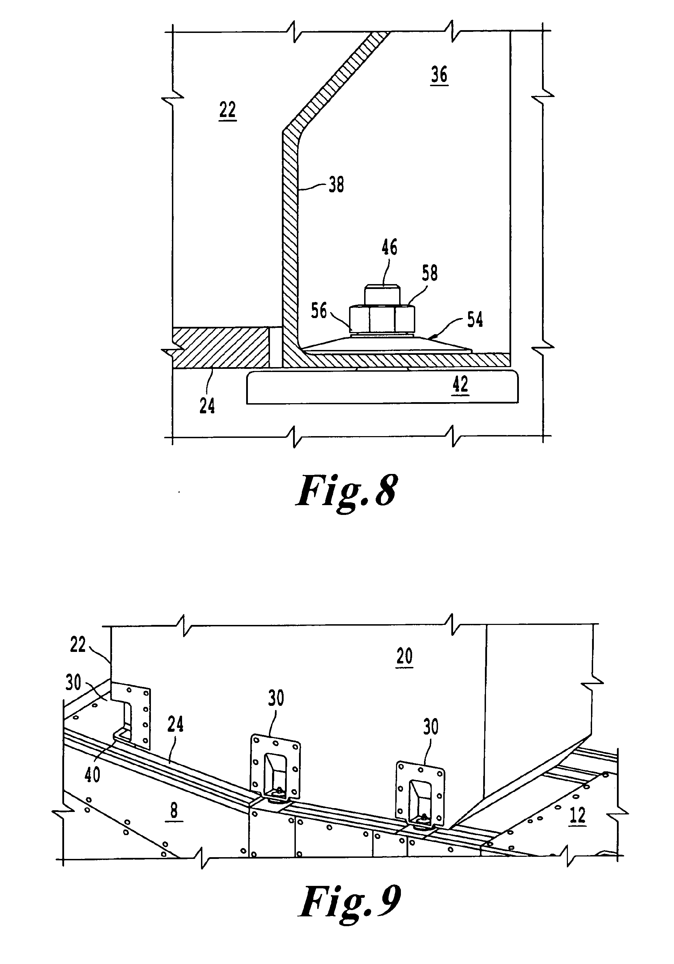

The fastener system 50 is then tightened on the stud with any suitable wrenching tool. Fig. 8 is a cross-section view of the monument attachment system fully assembled to join the attachment hardware to the tie-down adapter. As seen therein, the locking nut 58 is fully tightened onto the threaded stud 46 to compress the conical washer 54. A torque value for the locking nut 58 is dependent on the hardware used, and the monument to be attached. Fastener systems are similarly installed on the remaining 5 tie-down adapters to secure the IFEC 20 to the cargo compartment floor 10. Fig. 9 shows the example IFEC of Fig. 2 fully attached to the raised portion of the cargo compartment floor of Fig. 1 in accordance with an embodiment of the invention. As seen in Fig. 9 the base 24 of the IFEC 20 includes attachment brackets 30 to provide a base structure for attaching the IFEC. Only 3 of the 6 monument attachment brackets are shown in Fig. 9.

A tie-down adapter and monument attachment method, such as the embodiments described above, allows the monument to be securely fastened with standard fasteners to an existing pattern of holes in the cargo compartment floor that were originally created for the cargo tie-down points. Thus, undesirable modification to the floor substructure is not required. Further, quick, easy installation of the tie-down adapter is achieved with a standard or powered screwdriver, prior to positioning the aircraft monument. Thus, the threaded holes in the floor substructure are not covered by a monument, such that blind threading of the fasteners is not required and use of a screwdriver is not restricted. Moreover, the protruding studs from the tie-down adapters provide a positive alignment reference for aircraft monument, thereby simplifying installation.

In addition the tie-down adapter and mounting system and method can provide flexibility in reconfiguring monuments, as is typical on the main deck. So long as an aircraft monument maintains the same attach pattern as the established tie-down points, a monument can be relocated anywhere in the cargo area where tie-down points exist. The attachment could also be applied to temporary flight test equipment. In this instance, the test equipment is removed when testing is complete, and the corresponding tie-down adapters are removed and replaced with tie-down points regain the cargo carrying capability. For example, when the aircraft monument is no longer needed, the tie-down adapters 40 can be removed and replaced with the DAN152 tie-down point for securing loose luggage.

Numerous modifications and variations of the present invention are possible in light of the above teachings. For example, although primarily described in terms of the cargo deck of an aircraft, the inventive tie down adapter disclosed herein may be applied to any flooring structure having existing tie downs that are not suitable for installation of relatively large and heavy monuments. As another example, the tie down adapter disclosed herein may be implemented at any flooring structure or deck of a non-commercial or commercial aircraft, as well as non-aircraft applications. It is therefore to be understood that within the scope of the appended claims, the invention may be practiced otherwise than as specifically described herein.

## Claims

1. A monument adapter system for attaching a monument to a floor, the system comprising:
a tie-down adapter configured to be fastened to the floor, the tie-down adapter comprising a base configured to be mounted to an existing threaded hole pattern in a substructure of the floor, and a stud protruding from the base and configured to be coupled to a base structure of the monument;
a monument attachment bracket configured to be fixed to a base structure of the monument, the attachment bracket including a monument mount opening which receives said stud of the tie-down adapter; and
a fastener system which connects with said stud such that the monument attachment bracket is fastened to the tie-down adapter.

2. The monument adapter system of Claim 1, wherein:
said monument adapter system configured to attach an aircraft monument to an aircraft cargo compartment floor,
said tie-down adapter is configured to be fastened to the cargo compartment floor, and configured to be coupled to a base structure of the aircraft monument, and
said monument attachment bracket is configured to be fixed to a base structure of the aircraft monument.

3. The monument adapter system of Claim 2, wherein the monument attachment bracket comprises:
a face plate having fastener holes for fixing the attachment bracket to an aircraft monument; and
a cavity formed by recessed surfaces which are recessed from the face plate, wherein a lower surface of the cavity includes said mount opening which receives the stud of the tie-down adapter.

4. The monument adapter system of Claim 3, wherein the mount opening is enlarged to be substantially larger than the stud to provide design and alignment tolerances.

5. The monument adapter system of Claim 1, wherein the tie-down adapter comprises a separate base and a separate stud which are mechanically pressed to each other to form the tie-down adapter as an integral unit.

6. The monument adapter system of Claim 1, wherein the tie-down adapter comprises a one piece unit including said base and said stud formed as an integral unit.

7. The monument adapter system of Claim 1, wherein the base further comprises countersunk through holes that receive respective fasteners configured to secure the tie-down adapter to the cargo compartment floor.

8. The monument adapter system of Claim 1, wherein the stud of the tie-down adapter is a threaded stud, and the fastening system includes a self locking nut that mates with the threaded stud.

9. The monument adapter system of Claim 7, wherein the fastener system comprises:
eccentric bushings configured to compensate for tolerances provided by the enlarged mount opening;
a conical washer which distributes a fastener load; and
a self-locking nut configured to be fastened to the threaded stud to compress the conical washer.

10. The monument adapter system of Claim 1, wherein the tie-down adapter is made from Aluminium alloy 3.4364 T6 material.

11. The monument adapter system of Claim 1, wherein the base is a circular shape having a diameter of 44.5 mm;
the countersunk holes are spaced 25.4 mm along the center line of the base, each through hole being 5 mm in diameter with a 100° countersink; and
the stud is 5/16 inch in diameter and 22.5 mm in length.

12. A method for attaching an aircraft monument to the cargo compartment floor of an aircraft without modifying the floor structure, the method comprising:
identifying an existing configuration of tie-down on the cargo compartment floor, which is suitable for meeting mounting requirements for the aircraft monument;
replacing each tie-down with a tie-down adapter to provide a mounting configuration of tie-down adapters;
designing an aircraft monument base structure corresponding the mounting configuration of tie-down adapters; and
fastening the aircraft monument base structure to the mounting configuration of tie-down adapters.

13. The method of Claim 11, wherein said identifying an existing configuration of tie-down points comprises:
determining a minimum area of cargo compartment floor space necessary for mounting the aircraft monument base structure;
determining a minimum number of mounting points necessary for mounting the aircraft monument based on mounting load requirements for the aircraft monument and a load capacity of each existing tie-down point; and
identifying an existing configuration of cargo compartment tie-down points which includes at least the minimum area a number of tie-down points corresponding to the minimum number of mounting points for the aircraft monument.

14. The method of Claim 12, wherein said replacing comprises:
removing all fasteners that fasten each tie-down point to the cargo compartment floor and removing the respective tie-down point to reveal at least one threaded hole in the cargo deck substructure;
providing a tie-down adapter having a mounting configuration substantially similar to a mounting configuration of the removed tie-down point; and
attaching the tie-down adapter to the cargo deck floor using at least one of the fasteners removed from the tie-down point.

15. The method of Claim 12, wherein said designing an aircraft monument base structure comprises providing a plurality of monument attachment brackets fixed to the aircraft monument base structure in a configuration substantially corresponding to said mounting configuration of said tie-down adapters.

16. The method of Claim 13, wherein said fastening comprises:
aligning the aircraft monument base structure such that each of the attachment brackets is coupled to a respective tie-down adapter; and
providing fasteners on each tie-down adapter to fix each tie-down adapter to a respective mounting bracket on the aircraft monument.

17. A tie-down adapter for attaching an aircraft monument to an aircraft cargo compartment floor, the tie-down adapter comprising:
a base comprising a plurality of fastener through holes configured to align with an existing threaded hole pattern in the cargo compartment floor, and
a stud protruding from the base such that the stud is configured to penetrate a mount opening of an attachment bracket on an aircraft monument to be attached, the stud having a threaded shaft configured to receive a fastener for fixing the tie-down adapter to the monument attachment bracket.

18. The tie-down adapter of Claim 16, wherein the base and stud are separate parts that are mechanically pressed to each other to form the tie-down adapter as an integral unit.

19. The tie-down adapter of Claim 16, wherein the plurality of through holes each comprises a countersunk through hole s that receive respective fasteners configured to secure the tie-down adapter to the cargo compartment floor.

20. The tie-down adapter of Claim 16, wherein:
the base and stud are an integral unit made from aluminium alloy 3.4364 T6,
the base is circular in shape and has a diameter of approximately 44.5 mm,
the fastener holes are spaced approximately 25.4 mm along a center line of the base, each fastener hole having a diameter of approximately 5 mm and a 100° countersink, and
the stud comprises a threaded shaft having a diameter of approximately 5/16 inch and a length of approximately 22.5mm.
